(19) Europäisches Patentamt
European Patent Office
Office européen des brevets

(11) **EP 4 235 837 A1**

(12) **EUROPÄISCHE PATENTANMELDUNG**

(43) Veröffentlichungstag:
**30.08.2023  Patentblatt 2023/35**

(21) Anmeldenummer: **22158290.1**

(22) Anmeldetag: **23.02.2022**

(51) Internationale Patentklassifikation (IPC):
*H01M 4/06* (2006.01)    *H01M 4/12* (2006.01)
*H01M 4/38* (2006.01)    *H01M 12/06* (2006.01)
*H01M 50/109* (2021.01)    *B65D 75/36* (2006.01)

(52) Gemeinsame Patentklassifikation (CPC):
**H01M 4/06; B65D 75/367; H01M 4/12;**
**H01M 4/386; H01M 12/06; H01M 50/109;**
B65D 2585/88; H01M 2220/30; H01M 2300/0002

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Lang, Dr. Jürgen Erwin**
**76229 Karlsruhe (DE)**

(72) Erfinder:
• **LANG, Jürgen Erwin**
  **76229 Karlsruhe (DE)**
• **KORTH, Karsten**
  **79639 Grenzach-Wyhlen (DE)**
• **BÖSS, Florian**
  **63452 Hanau (DE)**
• **MOUSSALLEM, Imad**
  **63457 Hanau (DE)**

• **TEMPEL, Hermann**
  **52372 Kreuzau (DE)**
• **DURMUS, Yasin Emre**
  **52428 Jülich (DE)**
• **KUNGL, Hans**
  **69118 Heidelberg (DE)**
• **MONTIEL-GUERRERO, Saul Said**
  **50825 Köln (DE)**
• **EICHER, Rüdiger**
  **52428 Jülich (DE)**

(74) Vertreter: **Bendele, Tanja**
**RUHR-IP Patentanwälte**
**Brucker Holt 58**
**45133 Essen (DE)**

Bemerkungen:
Die Bezugnahmen auf die Zeichnung(en) Nr. 5C gelten als gestrichen (R. 56(4) EPÜ).

(54) **ELEKTROCHEMISCHE SILIZIUM-LUFT KNOPFZELLE**

(57)    Gegenstand der Erfindung ist eine elektrochemische Silizium-Luft-Primärzelle als Silizium-Luft-Knopfzelle 0 sowie als Kit mit einer Schutzfolie und in einer Verkaufs- oder Vorratspackung 11 als auch die Verwendung von Silizium in einer Silizium-Luft-Primärzelle als Knopfbatterie.

EP 4 235 837 A1

Fig. 1

**Beschreibung**

Gegenstand der Erfindung ist eine elektrochemische Silizium-Luft-Primärzelle als Silizium-Luft-Knopfzelle sowie als Kit mit einer Schutzfolie und in einer Verkaufs- oder Vorratspackung, als auch die Verwendung von Silizium in einer Silizium-Luft-Primärzelle als Hörgerätebatterie. Des Weiteren umfasst die Erfindung eine Primärzelle mit Silizium als Anodenmaterial in Form von Silizium-Partikeln, die insbesondere als Silizium-Primärpartikel mit einer Partikelgröße zwischen 1 nm bis 3000 nm vorliegen und vorzugsweise Agglomerate und/oder Aggregate bilden oder als mindestens ein Formkörper aus diesen Silizium-Partikeln vorliegen. Das Anodenmaterial umfasst vorzugsweise im geladenen Zustand kein Lithium.

Einerseits steigt der Bedarf an sogenannten Knopfzellen aufgrund der zunehmenden Elektrifizierung aller Lebensbereiche und der deutlichen Zunahme der Verwendung von Hörgeräten, die immer mehr an Akzeptanz gewinnen. Gleichzeit steigt der Druck umweltfreundliche Batterietechnologien bereitzustellen. Damit besteht ein hoher Bedarf an umweltverträglichen Batterien, deren Komponenten einerseits unbeschränkt verfügbar und andererseits unbeschränkt recyclebar, umweltverträglicher und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es auf wirtschaftliche Weise eine Silizium-enthaltende galvanische Zelle bereitzustellen, die eine gute Leistungsdichte sowie eine hohe Angangsspannung bereitstellen kann. Des Weiteren bestand die Aufgabe eine Silizium-enthaltende galvanische Zelle bereitzustellen, die vorzugsweise eine hohe Leistungsdichte aufweist und vorzugsweise in der Bauart einer Knopfzelle betrieben werden kann. Des Weiteren soll die galvanische Zelle vorzugsweise frei von Lithium sein, wobei frei von Lithium vorzugsweise bedeutet, dass der Gehalt an Lithium im geladenen Zustand unter 1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 0,1 Gew.-%. Vorzugsweise soll die galvanische Zelle auch Edukte und Reaktionsprodukte aufweisen, die aus Recyclingprozessen stammen, Nebenprodukte sind und/oder in Recyclingprozessen weiterverwendet werden können.

Überraschenderweise haben die Erfinder gefunden, dass die elektrochemische Silizium-Luft Primärzelle in der Ausgestaltung als Silizium-Luft-Knopfzelle ausgebildet werden kann.

In der erfindungsgemäßen Primärzelle können vorzugsweise spezifische Silizium-Partikel als aktive Komponenten als Bestandteil des Anodenmaterials dienen und in der elektrochemischen Primärzelle nennenswerte Leistungsdichten bis unerwartet hohe Leistungsdichten von größer gleich 22 Mikrowatt/mm$^2$ erzielt werden, bevorzugt größer gleich 100 Mikrowatt/mm$^2$. Die Effizienz der Elektrodenmasse kann überraschend bis über 87 % betragen. Die erfindungsgemäßen Primärzellen können vorzugsweise eine Energie von 1 bis 1,5 Wh über einen Zeitraum von 140 bis 160 Minuten liefern. Die Spannung kann im Bereich von 0,8 bis 1,2 Volt eingestellt werden. Die hohen Leistungsdichten können mit KOH oder Carbonat-enthaltenden wässrigen Elektrolyten erzielt werden. Gleichfalls können wässrige Gele als Elektrolyt für Silizium-Partikel als Anodenmaterial eingesetzt werden. Im Anodenmaterial kann das Silizium als eine Anode vorliegen, indem es als Formkörper, insbesondere poröser Formkörper, vorzugsweise mit einem porösen Gerüst, gebildet aus Silizium-Partikeln, Agglomeraten und/oder Aggregaten der Silizium-Partikel vorliegt. So können mit Anodenscheiben als gesinterte Formkörper aus Silizium-Partikeln gute Leistungsdichten gemessen werden. In allen Versuchen konnte mit Elektroruß oder elektrochemisch behandeltem bzw. hergestelltem Ruß, Carbonblack und Leitruß die besten Leistungsdichten für Silizium enthaltende Primärzellen erhalten werden.

Gegenstand der Erfindung ist eine elektrochemische Silizium-Luft Primärzelle die als Silizium-Luft-Knopfzelle, insbesondere als Hörgerätebatterie, ausgebildet ist.

Der erfindungsgemäße Typ der Silizium-Luft-Batterie verwendet Silizium (Siliziummetall) als Anode und Luftsauerstoff ($O_2$) als Kathode. Die Kathode der Silizium-Luft-Batterie wird als Luftkathode bezeichnet. Die wässrige Lösung von Kaliumhydroxid (KOH) wird in einer bevorzugten Ausführungsform als Elektrolyt in die Silizium-Luft-Batterie aufgenommen. Nachdem der Luftsauerstoff die chemische Reaktion der Kathode zu einem Hydroxyd-Ionen ($OH^-$) eingegangen ist, unterliegt die aus dem Silizium-Partikel Gemisch (Granulat, Siliziumsirup, Siliziumplatte oder Silziumfolie) bestehende Siliziumanode der Sauerstoff Reduktionsreaktion zur Ausgabe stabiler Zellspannungen (Entladungsspannung). Die chemische Formel der Sauerstoffreduktionsreaktion ist wie folgt aufgeführt:

Kathode:    $H_2O + O_2 + 2e- \rightarrow 2OH^-$

Anode:    $Si + 4OH- \rightarrow Si(OH)_4 + 4e-Si(OH)4$ in $KOH \rightarrow SiO_2 + 2\,H_2O$

Reaktion:    $Si + O_2 \rightarrow SiO_2$

Da die Luftkathode der Silizium-Luft-Batterie nur als Medium verwendet wird, darf ihre Aktivität/Masse nicht verändert oder verbraucht werden. Während der Herstellung der Silizium-Luft-Batterie kann die Beladung der Silizium-Anode der Silizium-Luft-Batterie erhöht werden, um die Kapazität und die spezifische Energie zu erhöhen, wodurch das Ziel der Miniaturisierung der Silizium-Luft-Batterie erreicht wird.

Dabei ist es besonders bevorzugt, wenn das Silizium als Anodenmaterial Dotierstoffe umfasst, die ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon und optional ausgewähltaus Elementen der Eisengruppe. Dabei ist es besonders bevorzugt, wenn die Dotierstoffe zu größer gleich 1 Element der 15. Hauptgruppe auf $10^6$ Silizium-Atome und/oder größer gleich 1 Element der 13. Hauptgruppe auf $10^6$ Silizium-Atome vorliegen.

Das Silizium kann als Anodenmaterial als Silizium-Partikel oder als Formkörper vorliegen. Formkörper umfassen Abschnitte und/oder Bruchstücke von Silizium-Wafern, sowie Polyeder oder zylindrische Formkörper als auch Tabletten oder flächige scheiben- oder plattenförmige Formkörper vorliegen. Die Silizium-Partikel können vorzugsweise mit einer mindestens bimodalen Partikelgrößenverteilung vorliegen umfassend i) Siliziumpartikel der Partikelgröße von 1 nm bis 1000 nm, und ii) Siliziumpartikel mit Partikelgrößen von 1 bis 20 Mikrometer.

Die Silizium-Partikel liegen vorzugsweise in Form von Agglomeraten von Silizium-Primärpartikeln, Aggregaten von Silizium-Primärpartikeln oder Gemischen dieser Agglomerate und Aggregate vor und wobei Agglomerate und/oder Aggregate eine Größe von 100 bis 3000 nm aufweisen.

Nach einer besonders bevorzugten Ausführungsform umfasst die Anode als Anodenmaterial Silizium, insbesondere dotiertes Silizium, wobei i) das Silizium in Form von Silizium-Partikeln vorliegt, insbesondere liegen die Silizium-Primärpartikel mit einer Partikelgröße zwischen 1 nm bis 3000 nm vor, und optional sind die Silizium-Primärpartikel im Wesentlichen amorph.

In alternativen Ausführungsformen kann es bevorzugt sein, wenn das Silizium oder die Partikel monokristallin oder polykristallin vorliegen, dabei kann es auch bevorzugt sein, spezifische Gemische umfassend kristalline und amorphe Silizium-Partikel als Anodenmaterial einzusetzen.

Ferner ist es bevorzugt, wenn ii) das Silizium in Form eines Formkörpers vorliegt, der ein Gerüst von Silizium-Partikeln umfasst. Dieser Formkörper ist vorzugsweise erhätlich in einem Sinter oder zumindest teilweisen Schmelzprozess aus Silizium-Partikeln. Bevorzugte Formkörper umfassen Presslinge, gesinterte Formkörper, Formkörper gebildet aus angeschmolzenen und nachfolgend verfestigten Silizium-Partikeln, Aggregaten und/oder Agglomeraten oder Tabletten von Silizium-Partikeln mit Gelbildner.

Des Weiteren ist es bevorzugt, wenn das Anodenmaterial umfasst Silizium oder Silizium-Partikel und optional Kohlenstoff und Silizium enthaltende Partikel und optional Partikel mindestens einer allotropen Kohlenstoffmodifikation, wobei das Silizium einen Gehalt an Eisen von größer gleich 0,02 mg/kg aufweist kann. Ferner kann das Silizium optional mit mindestens einer allotropen Kohlenstoffmodifikation, einen Gehalt an Eisen, Kalium, Zink, Aluminium, Kohlenstoff, Calcium, optional Titan, optional Sauerstoff, optional Kupfer von jeweils größer gleich 0,01 mg/kg aufweisen. Auf diese Weise kann beispielsweise Silizium aus Recyclingprozessen, insbesondere aus Recycling von Photovoltaikpannels, Rückständen von Siliziumwafer Sägeprozessen usw. rückgeführt werden.

Ein besonders bevorzugtes Anodenmaterial kann Siridion®-Black umfassen. Nach einer Alternative kann das Anodenmaterial umfassen Silizium enthaltende Partikel mit einem Gehalt an Kohlenstoff, insbesondere mit einem Gehalt von 1 bis kleiner 10 Gew.-% Kohlenstoff im Gesamtgehalt der Silizium-enthaltenden Partikel. Bevorzugte Anodenmaterialen können Gemische von Silizium Partikeln ohne Kohlenstoffgehalt und Silizium Partikel mit einem Kohlenstoffgehalt umfassen.

Das Anodenmaterial, insbesondere umfassend Silizium-Partikel, kann als feste Mischung oder auch als Anodenmaterial in Form eines Gels umfassend den Elektrolyten oder als Mischung oder Tablette zur Ausbildung eines Gels bereitgestellt werden. In den Formkörpern können die Silizium-Partikel i) stoffschlüssig miteinander verbunden sein ii) miteinander a) verschmolzen und/oder b) versintert und/oder c) verpresst sein.

Die erfindungsgemäße Primärzelle umfasst eine Anode, eine Luftkathode, einen Elektrolyten sowie mindestens einen Separator, wobei der Separator die Luftkathode und die Anode voneinander separiert. Die Anoden kann umfassen ein Anodengehäuse sowie das Anodenmaterial. Die Luftkathode kann als eine Luft-Kathodenbaueinheit ausgebildet sein und kann umfassen Gasdiffusionselektrode, optional eine oder mehrere Sperrschichten, eine Kathodenzusammensetzung und mindestens einen Separator.

Die erfindungsgemäße Primärzelle weist vorzugweise ein Anodengehäuse, insbesondere umfassend das Anodenmaterial, ein Kathodengehäuse, Isolatorschicht, einen Bereich des Kathodengehäuses mit Öffnungen für Gasdurchtritt, insbesondere Luftdurchtritt, einen Elektrolyten sowie mindestens einen Separator, eine Kathodenzusammensetzung und optional eine Gasdiffusionselektrode auf. Das Kathodengehäuses mit Öffnungen für Gasdurchtritt, insbesondere Luftdurchtritt, ist vorzugsweise ein Bestandteil der Luftkathode.

In der Primärzelle ist in einem Kathodengehäuse und ein darin angeordnetes Anodengehäuse vorgesehen. Eine Isolatorschicht trennt das Anodengehäuse räumlich und elektrisch vom Kathodengehäuse. Anoden- und Kathodengehäuse sind becherartig. Die beiden Gehäuse sind überwiegend zylindrisch ausgebildet und können ineinander geschoben werden, wobei stirnseitig jeweils die Böden der beiden becherförmigen Gehäuse, d.h. Anodengehäuse und Kathodengehäuse, die Knopfzelle nach außen begrenzen. Das Anodengehäuse ist im Kathodengehäuse angeordnet. Die Luftkathode ist im Bereich des Bodens des Kathodengehäuses angeordnet und bedeckt den Boden vorzugsweise vollständig. Im Boden des Kathodengehäuses sind Öffnungen für den Gasdurchtritt angeordnet, und Der Bereich des Kathodengehäuses ist insbesondere Teil der Luftkathode.

Innen unmittelbar oder beabstandet auf dem Boden des Kathodengehäuses sind in der folgenden Reihenfolge als Schichten angeordnet: optional Gasdiffusorscheibe, Gasdiffusionselektrode, optional eine oder mehrere Sperrschichten, Kathodenzusammensetzung und Separator. Die Gasdiffusionselektrode, optional eine oder mehrere Sperrschichten, die Kathodenzusammensetzung und der Separator können eine Luftkathodenbaueinheit ausbilden, die vorzugsweise als eine Einheit auf den Boden des Kathodengehäuses eingesetzt werden kann. Das Anodengehäuse ist auf die Schicht des Separators mit der Öffnung des Anodengehäuses aufgesetzt und bildet den Anodenraum, in dem das Anodenmaterial angeordnet ist oder einbringbar ist. Der Anodenraum kann an seiner inneren Oberfläche eine Beschichtung umfassend ein Metall oder eine Legierung aufweisen. Die Beschichtung kann mittels Plattieren aufgebracht werden.

Das Anodengehäuse kann innen ein bis mehrfach plattiert sein, insbesondere mit Kupfer. Das Kathodengehäuse kann aus Nickel plattiertem Stahl hergestellt sein.

Als Kathodenzusammensetzung kann eine Mischung umfassend Mangandioxid, Leitfähigkeitsvermittler wie Elektroruß/ Leitruß, Carbonblack, Graphen und ein Bindemittel, wie Teflon enthaltendes Bindemittel. Bevorzugt ist eine Kathodenzusammensetzung umfassend i) mindestens ein Manganoxid, insbesondere Manganoxid und/oder Mangandioxid, Platin, Platin-Basis, Silber, Palladium, Ruthenium oder andere Oxide von Metallen die Reduktion von Sauerstoff katalysieren, je einzeln oder gemeinsam als Katalysator und ii) optional Kohlenstoff enthaltenden Leitfähigkeitsvermittler, insbesondere umfassend Carbonblack, Ruß, Graphit, Aktivkohle, Kohlenstoffmodifikationen. Das Kathodenmaterial kann umfassen zu 70 bis 95 Gew.-% Mangandioxid und auf 100 Gew.-% des Kathodenmaterials einen Kohlenstoff enthaltenden Leitfähigkeitsvermittler und optional weitere Additive, insbesondere umfasst die Kathode als Leitfähigkeitsvermittler Kohlenstoff enthaltende Partikel oder eine Kohlenstoff enthaltende Paste. Die Kohlenstoff enthaltenden Partikel umfassen Ruß, Leit-Ruß, elektrochemisch hergestellten Ruß, Graphit, Graphen und/oder elektrisch leitfähige Polymere und/oder Graphen.

Die Gasdiffusionselektrode kann eine Membran und/oder ein Stahlgitter, vorzugsweise aus einem plattierten Stahldraht bspw. Nickelplattiert sein. Gleichfalls kann eine Gasdiffusionselektrode umfassend eine PTFE-Schicht, wie bspw. Jene von den Firmen Gaskatel, Covestro etc. eingesetzt werden. Gasdiffusionselektroden können alternativ Membranen aus den folgenden Materialien umfassen Ethylcellulose, Polyphenylenoxid, Polymethylpenten, modifziertes Poylcarbbonat, Cellulosetriacetat, Celluloseacetat, Polydimethylsiloxan (PDMS), PSDM mit PC, Polysulfon mit PDMS oder Polyimid.

Das Anodenmaterial kann umfassen Silizium-Partikel, Agglomerate und/oder Aggregate von Silizium-Partikeln jeweils unabhängig in einem Gel, insbesondere umfasst das Gel Gelbildner uns den wässrigen Elektrolyten. Alternativ kann das Anodenmaterial Silizium in Form von dreidimensionalen Formkörpern als Anode umfassen, die durch Pressen, zumindest teilweises Schmelzen oder Sintern erhältlich sind.

Dabei ist es weiter besonders bevorzugt, wenn die Anode, insbesondere das Anodenmaterial, insbesondere im geladenen Zustand der Primärzelle, kein Lithium umfasst, vorzugsweise keine Lithium-Ionen, im Konzentrationsbereich von größer gleich 10000 Gew-ppm, größer gleich 1000 Gew.-ppm aufweist. Besonders bevorzugt weist das Anodenmaterial kleiner 100 Gew.-ppm LithiumAtome auf. Vorzugsweise weist das Anodenmaterial kleiner $10^{20}$ Lithium-Atome/cm$^3$ im Silizium-Partikel auf. Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt.

Vorzugsweise weist das Anodenmaterial kleiner $10^{20}$ Lithium-Atome/cm$^3$ Silizium-Partikel auf. Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt. Zudem ist es bevorzugt, wenn die Kathode, insbesondere das Kathodenmaterial unter 10000 Gew.-ppm Lithium enthält. Ferner ist es bevorzugt, wenn die Primärzelle umfassend Anode und Kathode sowie optional Elektrolyt, einen Gesamtgehalt an Lithium, insbesondere Lithium-Ionen, von kleiner gleich 10000 Gew.-ppm, bevorzugt kleiner 5000 Gew.-ppm, besonders bevorzugt kleiner 1000 Gew.-ppm enthält.

Der Separator kann aus einem oder mehreren der folgenden Materialien gebildet sein: Cellophan, Polyvinylchlorid, Acrylnitril oder andere mikroporöse und/oder permeabel hergestellte Polymere, wie Polypropylen oder Polyethylen.

Die Isolatorschicht umfasst ein dauerhaft elektrisch isolierendes Material, wie vorzugsweise Polyethylen, High-density Polyethylen, Propylen, insbesondere High-density Polypropylen, Nylon, oder andere dem Fachmann geläufige isolierend wirkende polymere Zusammensetzungen.

Die Wandstärke des Anoden- und/oder Kathodengehäuse beträgt von 0,02 mm bis 0,4 mm. Das Anodengehäuse ist innen vorzugsweise mit einer Kupferschicht von 0,005 mm bis 0,05 mm plattiert. Die Kupferschicht ist vorzugsweise frei von Kupferoxiden.

Das Anodengehäuse umfasst vorzugsweise außen eine Beschichtung aus rostfreiem Stahl auf der eine Beschichtung aus Nickel aufgebracht ist. Die Stahlbeschichtung weist vorzugsweise eine Schichtdicke von 0,02 mm bis 0,3 mm auf und/oder die Nickelbeschichtung weist eine Dicke von 0,002 mm bis 0,03 mm auf. Die Gesamtdicke der Wand des Anodengehäuses liegt vorzugsweise im Bereich von 0,02 mm bis 0,4 mm.

Die Anoden kann als Anodenmaterial Silizium in Form eines dreidimensionalen Formkörpers umfassen, der erhältlich ist aus Silizium-Partikeln und/oder Silizium-Partikel umfasst, wobei insbesondere der dreidimensionale Formkörper auf mindestens einem Teil seiner äußeren Oberfläche eine Beschichtung einer leitfähigen metallischen Legierung oder eines Metalls zur elektrischen Kontaktierung aufweist.

Der dreidimensionale Formkörper kann als im Wesentlichen ebene Platte vorliegen, wobei die Platte i) eine Vorderseite und eine der Vorderseite gegenüberliegende Rückseite aufweist, wobei die Vorderseite einem Elektrolyten zugewandt sein wird und die Rückseite zumindest teilweise eine Beschichtung mit einer leitfähigen metallischen Legierung oder eines Metalls zur elektrischen Kontaktierung aufweist. Die Beschichtung umfasst vorzugsweise Kupfer, Gold, insbesondere eine leitfähige metallische Legierung oder ein Metall umfassend Elemente der Gruppen 3 bis 11, vorzugsweise der Gruppen 8. bis 11., und besonders bevorzugt der Gruppen 3 bis 11 der IV, V und VI Periode des Periodensystems (Hauptgruppen 3 bis 11), besonders bevorzugt sind die Elemente der Gruppe 8. bis 11. und der V und VI Periode, bevorzugt ist Kupfer oder sind die Edelmetalle, umfassend Gold, Palladium, Ruthenium, Rhodium, Osmium, Iridium, Platin und/oder Silber.

Der Formkörper der Anode weist vorteilhaft eine Dichte von 0,1 $g/cm^3$ bis 2,4 $g/cm^3$, insbesondere von 0,1 $g/cm^3$ bis 2,2 $g/cm^3$ auf, bevorzugt eine Dichte von 0,7 bis 1,9 $g/cm^3$, besonders bevorzugt von 1,3 $g/cm^3$ +/- 0,6 $g/cm^3$. Ferner liegt der Formkörper bevorzugt als ein zylindrischer Formkörper vor, insbesondere mit einem Durchmesser von 2 bis 14 mm und einer Höhe von 0,1 mm bis 5 mm, vorzugsweise ist das Verhältnis von Durchmesser zu Höhe des Formkörpers größer 1,1 : 1, besonders bevorzugt von größer gleich 1,5 : 1.

Bevorzugt umfasst die Anode ein Granulat von Silizium-Partikeln mit einer mindestens bimodalen, vorzugsweise mit einer mindestens trimodalen Verteilung an Fraktionen von Silizium-Partikeln, wobei eine Fraktion ausgewählt ist aus Silizium-Partikeln mit einem Durchmesser größer als 10 nm und kleiner gleich 3 mm, bevorzugt sind Granulate, die in mindestens einer Dimension eine Kantenlänge von 1 mm aufweisen. Bevorzugt umfasst die Anode kristalline Silizium-Partikel umfassend 111-Ebenen. Vorteil der groben Silizium-Partikel ist eine optimale Abstimmung von aktiver Oberfläche und Porosität, die ein Eindringen des wässrigen, alkalischen Elektrolyten ermöglicht.

Der Elektrolyt umfasst vorzugsweise anorganische Salze und optional einen Puffer und/oder ein Puffersystem. Insbesondere umfasst der Elektrolyt Wasser, bevorzugt ist der Elektrolyt flüssig, insbesondere flüssig bis gelförmig. Besonders bevorzugt ist der Elektrolyt eine wässrige Hydroxid-Anionen, Carbonat-Anionen oder Halogenid-Anionen, insbesondere Fluorid-Anionen und/oder Chlorid-Anionen enthaltende Zusammensetzung. Ferner kann der Elektrolyt ausgewählt sein aus a) einer wässrigen, alkalische Salze enthaltenden fluiden Zusammensetzung, b) einer wässrigen oder nicht-wässrigen Fluorid-Anionen enthaltenden fluiden Zusammensetzung, c) einer wässrigen Fluorid-Anionen enthaltenden Zusammensetzung mit einem Gehalt an ungelöstem Fluorid, insbesondere umfasst die Zusammensetzung mindestens ein Salz ausgewählt aus $MnF_2$, $NH_4F$ und/oder KF, oder d) einer nicht wässrigen Fluorid-Anionen enthaltenden Zusammensetzung umfassend mindestens eine ionische Flüssigkeit optional in Gegenwart von weiteren Salzen von Fluorid-Anionen. Besonders bevorzugt sind Hydroxid-Ionen und Carbonat-Ionen in wässrigen oder wässrigen gelförmigen Elektrolyten. Des Weiteren bevorzugt sind wässrige Elektrolyten mit mindestens einem Salz ausgewählt aus Mangandifluorid, Mangandichlorid, Ammoniumfluorid, Kaliumhydroxid, Natriumhydroxid, Ammoniumchlorid, Natriumchlorid, Natriumfluorid, Kaliumfluorid und/oder Salz einer Carbonsäure. In einer Ausführungsform kann der Elektrolyt anorganische Salze umfassen und einen pH-Wert von 2 bis 9,5 aufweisen und optional einen Puffer und/oder ein Puffersystem enthalten.

Zur Ausbildung eines Gels können im Elektrolyten beispielsweise eingesetzt werden: Carboxymethylcellusose (CMC), Stärke-Propfpolymere, wie hydrolysiertes Acrylnitril, gepropft auf Stärke, vernetzte Polyacrylpolymere wie ein Carbopol, Polyvinylpyrrolidon, alkalisch verseiftes Polyacrylnitril, Natrium- oder Kaliumsalze von Polyacrylsäure, insbesondere Superabsorber.

Die Herstellung eines solchen Gels kann beispielsweise erfolgen, indem Silizium-Pulver und der Gelbildner als trockne Mischung hergestellt werden und anschließend eine Elektrolytlösung z.B. wässrige KOH-Elektrolytlösung zugesetzt wird. Der Elektrolyt kann vorzugsweise 30 bis 40 Gew.-% KOH enthalten. Alternativ weist der Elektrolyt 2 bis 5 Mol KOH auf. Optional können 0,01 bis 3 Gew.-% keimbildendes $SiO_2$ zugesetzt werden.

Ferner kann der Elektrolyt ein Netzmittel umfassen, insbesondere umfasst das Netzmittel Tenside, wie anionische Tenside, kationische Tenside, amphotere Tenside, organische Lösemittel, wie Alkohol, Keton, Ether, Polyether, wie Polyalkylenoxid-enthaltende Verbindungen, Polyethylenoxid und/oder Polypropylenoxid. Das Netzmittel im Elektrolyten kann vorzugsweise mit einem Gehalt von 1 bis 1000 ppm.-Gew. in Bezug auf die Gesamtzusammensetzung des Elektrolyten von 100 Gew.-% vorliegen.

Zur Herstellung des Elektrolyten wird bevorzugt Wasser eingesetzt, insbesondere Wasser. Der Elektrolyt kann vorzugsweise eine Mischung von Wasser optional mindestens einem Alkanol mit 1 bis 6 C-Atomen und ca. 100 Atom-ppm Polyalkenyloxid mit einer terminalen Hydroxy und/oder Carbonsäure-Gruppe umfassen. Der pH-Wert des Wassers beträgt vorzugsweise pH = 7 +/- 0,5, insbesondere pH mit +/- 0,2. Das eingesetzte Wasser zur Herstellung des Elektrolyten weist vorzugsweise bei 25 °C, eine Leitfähigkeit von größer gleich 0,055 $\mu$S/cm, weiter bevorzugt von größer gleich 0,5 $\mu$S/cm und vorzugsweise kleiner 250 $\mu$S/cm auf. Bei ca. 100 °C kann die Leitfähigkeit des Wassers, vorzugsweise vollentsalztem Wasser (VE-Wasser) bei bis zu 3 $\mu$S/cm betragen, bei 60 °C bis zu 2 $\mu$S/cm. Das zur Herstellung des Elektrolyten verwendete Wasser weist bevorzugt einen Wert von 0,2 $\mu$S/cm bis kleiner 2,6 $\mu$S/cm. Der Gehalt an Metallen des Wassers zur Herstellung der Elektrolytzusammensetzung beträgt vorzugsweise kleiner gleich 50 $\mu$g/l, bevorzugt kleiner gleich 30 $\mu$g/l (ICP-MS), wie 20 bis 30 $\mu$g/l. In der Elektrolytzusammensetzung ist die Leitfähigkeit erheblich höher und liegt vorzugsweise bei größer gleich 1 mS/cm bei 25 °C, bevorzugt bei größer gleich 0,5 S/cm bei 25 °C.

Ferner ist Gegenstand der Erfindung eine Kathodenbaugruppe, insbesondere Luft-Kathodenbaugruppe, als Zwischenprodukt zur Herstellung einer Silizium-Luft-Primärzelle umfassend Luft-Kathode, Separator, Kathodenzusammensetzung, Membran, insbesondere Gasdiffusionselektrode, optional mit Kathodengehäuse mit Öffnungen im Kathodengehäuse. Die Baugruppe kann zudem zumindest einen Teil des Kathodengehäuses bis das vollständige Kathodengehäuse umfassen. Gleichfalls Gegenstand der Erfindung ist ein Zwischenprodukt umfassend eine Luft-Kathode, insbesondere die Kathodenbaugruppe, eine Anode mit Anodenmaterial und Separator, vorzugsweise als Zwischenprodukt einer Silizium-Luft-Knopfzelle.

Gleichfalls Gegenstand der Erfindung ist ein Kit umfassend eine oder mehrere Silizium-Luft-Primärzellen mit auf dem Kathodengehäuse im Bereich der Öffnungen für den Gasdurchtritt der jeweiligen Silizium-Luft-Primärzelle, angeordneter Schutzfolie. Die Schutzfolie verschließt die Luftkathode vor Benutzung gasdicht, insbesondere luftdicht. Die Schutzfolie ist vorzugsweise haftend und rückstandsfrei entfernbar. Die Schutzfolie ist gasdicht auf der Luftkathode angeordnet. Die Schutzfolie ist vorzugsweise auf dem Kathodengehäuse im Bereich der Öffnungen für den Gasdurchtritt angeordnet, vorzugsweise fixiert. Dabei wurde die Luftkathode, d.h. die Öffnungen des Kathodengehäuses die Schutzfolie unter Vakuum und/oder Schutzgas mit der Schutzfolie versiegelt. Somit umfasst das Kit eine Primärzelle an deren Luftkathode ein Vakuum und/oder ein Schutzgas unter der Schutzfolie anliegt. Die Schutzfolie kann auch als Einführhilfe ausgebildet sein. In einem solchen Anwendungsfall kann die Schutzfolie beispielsweise als eine Fahne, insbesondere umfassend eine Schutzfolie auf einem Trägermaterial, ausgeführt sein. Eine Hörgerätezelle mit dieser Einführhilfe kann vom Anwender sehr leicht direkt im Hörgerät platziert werden.

Ebenfalls Gegenstand der Erfindung ist eine Verkaufs- und Vorratspackung, insbesondere als eine Dosierverpackung, bevorzugt eine Drehverpackung oder eine Packung vom Blistertyp, für Silizium-Luft-Knopfzellen, bevorzugt mit mindestens einer Silizium-Knopfzelle, wobei die Verpackung umfasst mindestens ein flächiges Trägermaterial mit einer Ober- und einer Unterseite, wobei auf die Oberseite des Trägermaterials zumindest bereichsweise eine Haftschicht, insbesondere als Klebeschicht, aufgetragen ist, auf die mindestens eine Silizium-Luft-Knopfzelle mit ihrem Bereich des Kathodengehäuses mit den Öffnungen für den Gasdurchtritt aufbringbar ist oder angeordnet ist. Insbesondere ist mindestens eine Silizium-Luft-Knopfzelle mit den Öffnungen für den Gasdurchtritt gasdicht auf der Klebeschicht angeordnet. Die Haftschicht kann umfassen Acrylate und/oder Kolophonium. Beider Verkaufsverpackung vom Blistertyp können mehrere Silizium-Luft-Knopfzellen auf einem perforierten flächigem Trägermaterial angeordnet sein.

Eine Verkaufsverpackung als Drehverpackung kann ebenfalls ein flächiges Trägermaterial, insbesondere als eine Fahne je Silizium-Luft-Kopfzelle, mit einer Ober- und einer Unterseite, wobei auf die Oberseite des Trägermaterials zumindest bereichsweise eine Haftschicht, insbesondere als Klebeschicht, aufgetragen ist, auf die mindestens eine Silizium-Luft-Knopfzelle mit ihrem Bereich des Kathodengehäuses mit den Öffnungen für den Gasdurchtritt aufbringbar ist oder angeordnet ist.

Gegenstand der Erfindung ist auch die Verwendung von Silizium als Anodenmaterial in Silizium-Luft Primärzellen, die als Knopfzelle vorliegen.

Nachfolgend werden weitere bevorzugte Materialien für die jeweiligen Komponenten der Primärzelle genannt oder die Bedeutung von Begriffen definiert.

Als im Wesentlichen amorph gilt ein Pulver, das röntgenamorph ist. Als röntgenamorph gilt vorzugsweise ein Pulver mit einer Kristallinität kleiner 20 %, bevorzugt kleiner 12 %, besonders bevorzugt kleiner gleich 2 %. Der Kristallinitätsgrad kann nach folgender Methode mittels XRPD ermittelt werden über die Formel % Kristallinität = $(100 \times A)/(A + B - C)$ mit A = gesamte Peakfläche der Reflexe der kristallinen Bestandteile des Diffraktogramms; B = gesamte Fläche unterhalb der Peakfläche A; C = luftstreuend-, fluoreszierend- und gerätebedingte Untergrundfläche. Gesamte Peakfläche A mit Untergrund genau unterhalb der schmalen Reflexe der Si-Phase. Die Untergrundfläche C wurde anhand der XRD-Diagramme des Si-Referenzstandards NIST 640 (Si-Standard = 100 % Kristallinität) ermittelt. Fläche B entspricht einem eingelegten Untergrundverlauf sowie dem konstanten Untergrund C. Berechnung (HighScore Plus Software). Si-Standard (Standard Reference Material 640d for X-Ray Metrology, David R. Black, Donald Windover, Albert Henins, David Gil, James Filliben and James P. Cline; National Institute of Standards and Technology, Gaithersburg, MD, 20899). In röntgenamorphen Pulvern gibt es im XRPD keine scharfen, sondern nur wenige diffuse Interferenzen bei kleinen Beugungswinkeln. Stoffe mit einem derartigen Röntgenbeugungsdiagramm bezeichnet man als *röntgenamorph.* Kristallin: Kristall ist ein anisotroper, homogener Körper, der eine dreidimensional periodische Anordnung der Bausteine besitzt und ein XRPD mit klar definierten auflösbaren Reflexen besitzt. Unter amorphen Silizium-Primärpartikeln werden auch Silizium-Primärpartikel, in der Regel in Form eines Pulvers oder in einer festen Zusammensetzung verstanden, die (Silizium-Primärpartikel) röntgenamorph vorliegen und optional partikulärdispers in eine Hilfsstoffmatrix z.B. Ruß eingebettet sein können. Dabei bedeutet Röntgenamorph, dass dem Röntgensignal" entsprechend den Haupt-Peaks: 28.5° (111) 47.4° (220) 56.0° (311) 69.4° (400) maximal weniger als 10% der Signalamplituden bezogen auf die fcc Structure des Siliziums (JCPDS card: 00-027-1402) erreichen.

Gleichfalls Gegenstand der Erfindung sind Primärzellen, in denen das Anodenmaterial Silizium-Partikel umfassend Silizium-Primärpartikel, Agglomerate aus Silizium-Primärpartikeln, Aggregate aus Silizium-Primärpartikeln und/oder Gemische davon umfasst, wobei insbesondere die Agglomerate und/oder Aggregate eine Größe von 10 nm bis 100 $\mu$m (Mikrometer) aufweisen. Bevorzugt sind Agglomerate und/oder Aggregate im Bereich von 100 nm bis 5 Mikrometer, insbesondere von 200 nm bis 2 Mikrometer, bevorzugt von 300 nm bis 1,5 Mikrometer und/oder von 400 nm bis 1 Mikrometer. Zugleich können die Silizium-Primärpartikel eine Partikelgrößenverteilung von 1 nm bis 15 nm, insbesondere von 50 bis 300 nm oder von 100 nm bis 500 nm aufweisen.

Bevorzugte Primärzellen der Erfindung sind vorzugsweise frei von Lithium, wobei vorzugsweise unter frei von Lithium verstanden wird, dass der Gehalt an Lithium im geladenen Zustand in der Primärzelle, insbesondere umfassend die Anode, die Kathode und den Elektrolyten, kleiner gleich 1 Gew.-%, insbesondere kleiner gleich 0,1 Gew.-% in der Primärzelle beträgt, vorzugsweise beträgt der Gehalt an Lithium im Elektrodenmaterial der Anode im geladenen Zustand kleiner gleich 0,1 Gew.-%. Elektrochemische Primärzellen und insbesondere Anoden für elektrochemische Prozesse mit einem Lithiumgehalt unter 1 Gew.-%, vorzugsweise kleiner gleich 0,1 Gew.-%, gelten als frei von Lithium und werden erfindungsgemäß als reine Silizium-Zellen oder reine Silizium-Anoden bezeichnet.

Separatoren, d.h. Batterieseparatoren in einer Alkali-Batteriezelle werden zum Trennen einer negativen Elektrode von einer positiven Elektrode verwendet, wenn sie in einem geeigneten Elektrolyten angeordnet sind. Neben der Trennung der Elektroden weist der Separator während des Betriebs der Zelle, wenn die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, Lingnocellulose, Cellulose und/oder Mikrozellulose basieren.

Die Coating- bzw. Überzugszusammensetzung des Separators umfasst beispielsweise eine Mischung aus einem polymeren Bindemittel, einem hydrolysierbaren polymeren Ester und inerten Füllstoffen. Ein geeignetes polymeres Bindemittel ist Ethylen-Propylen-Kautschuk. Ein geeigneter hydrolysierbarer Ester ist ein filmbildendes Polyacrylat. Bei den inerten Füllstoffen kann es sich unter anderem um ein in Alkali unlösliches Pigmentmaterial einschließlich Kaolin, Metalloxiden und/oder Titanaten handeln. Der auf diese Weise hergestellte bzw. beschichtete Separator in den alkalischen Elektrolyten eingetaucht wird, reagiert der hydrolysierbare polymere Ester chemisch mit dem Elektrolyten unter Bildung eines polymeren Salzes und eines Alkohols. Der Alkohol geht in Lösung. Das Salz, das während der Hydrolyse gebildet wird und in dem Überzug zurückgehalten wird, dehnt sich aus durch weiteres Eindringen des Elektrolyten. Diese Ausdehnungskräfte der Polymerketten des Bindemittels führen zu einer weiteren Ausdehnung und zu einer Vergrößerung des intermolekularen Abstandes. Die in einem größeren Abstand voneinander angeordneten intermolekularen Ketten des polymeren Bindemittels ergeben eine Gesamtzunahme der Porosität des Filmüberzugs. Die daraus resultierende Zunahme der Porosität des Überzugs erlaubt eine schnellere Diffusion der Elektrolyt-Ionen durch den Separator, während sie noch eine wesentliche Sperrschicht (Sperre) für die von den Elektroden emittierten großen Ionen darstellt.

Ferner ist es bevorzugt, dass das Anodenmaterial Silizium-Partikel sowie Leitfähigkeits-vermittler umfasst, insbesondere umfasst der Leitfähigkeitsvermittler Kohlenstoff enthaltende Partikel oder eine Kohlenstoff enthaltende Paste, wie elektrisch leitfähige organische Polymere. Ein besonders bevorzugtes Anodenmaterial der Anode umfasst zu 10 bis 100,00 Gew.-%, insbesondere von 5 bis 90 Gew.-%, bevorzugt von 10 bis 95 Gew.-% Silizium-Partikel und einen Kohlenstoff enthaltenden Leitfähigkeitsvermittler, insbesondere von 5 bis 90 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm.

Bevorzugt ist ebenfalls ein Anodenmaterial der Anode umfassend zu 20 bis 75 Gew.-%, vorzugsweise von 20 bis 60 Gew.-%, Silizium-Partikel und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamt-zusammensetzung des Anodenmaterials 100 Gew.-% beträgt, insbesondere des Anodenmaterial ohne Elektrolyt, d.h. trockenes Anodenmaterial.

Entsprechend einer alternativen bevorzugten Ausführungsformen umfasst das Kathodenmaterial der Primärzelle Nickel-Kobalt-Cyanide oder Silber als Katalysator.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Das Kathodenmaterial umfasst vorzugsweise zur Beschleunigung der Löslichkeit von Sauerstoff, Mangandioxid. Ein besonders bevorzugtes Kathodenmaterial, insbesondere für eine Primärzelle mit Luftkathode, weist eine hydrophobe Kathode auf, deren Kathodenmaterial eine Mischung aus Mangan(di)oxid, d.h. Manganoxid und/oder Mangandioxid, vorzugsweise einer durchschnittlichen Partikelgröße von kleiner gleich 10 μm (Mikrometer), insbesondere elektrolytisches Gamma-Mangandioxid, einen Leitfähigkeitsvermittler und einen polymeren halogenierten Kohlenwasserstoff, insbesondere einen polymeren fluorierten Kohlenwasserstoff, umfasst, insbesondere einen Polytetrafluorethylen. Die Mischung kann in Platten gepresst, getrocknet werden. Dabei wird vorzugsweise in der Primärzelle auf die der Luft ausgesetzten Luftkathodenseite ein mikroporöser, hydrophober Film, beispielsweise aus einem polymeren fluorierten Kohlenwasserstoff, aufgebracht.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 5 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

Entsprechend einer bevorzugten Ausführungsvariante umfasst das Silizium, insbesondere die Silizium-Partikel, bevorzugt die amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf $10^6$ Silizium-Atome und/oder größer gleich 1 Element der 13. Hauptgruppe auf $10^6$ Silizium-Atome vorliegen, insbesondere größer gleich 1 Element der 15. Hauptgruppe auf $10^4$ Silizium-Atome und/oder größer gleich 1 Element der 13. Hauptgruppe auf $10^4$ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detektor gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativ bevorzugten Ausführungsform umfasst das Silizium, insbesondere die amorphen Silizium-Partikel, des Anodenmaterials Dotierstoffe, wobei die Dotierstoffe größer gleich $10^2$ Atome (ca. 100 Gew.-ppm, abhängig von Atomgewicht des Dotierstoffes) der 15. Hauptgruppe auf $10^6$ Silizium-Atome und/oder größer gleich $10^2$ Atome der 13. Hauptgruppe auf $10^6$ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $2*10^2$ Atome der 15. Hauptgruppe auf $10^6$ Silizium-Atome größer gleich $2*10^2$ Atome der 13. Hauptgruppe auf $10^6$ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiterer bevorzugten, alternativen Ausführungsformen umfasst das Silizium, insbesondere die amorphen Silizium-Partikel, des Anodenmaterials Dotierstoffe, wobei die Dotierstoffe größer gleich $10^3$ Atome der 15. Hauptgruppe auf $10^6$ Silizium-Atome und/oder größer gleich $10^3$ Atome der 13. Hauptgruppe auf $10^6$ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $10^4$ Atome der 15. Hauptgruppe

auf $10^6$ Silizium-Atome und/oder größer gleich $10^4$ Atome der 13. Hauptgruppe auf $10^6$ Silizium-Atome umfassen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe ganz besonders bevorzugt mit größer gleich $10^{21}$ Atomen/cm$^3$ vorliegt und ausgewählt aus mindestens einem Elektronendonator und Elektronenakzeptor ist. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann das Silizium einen Gehalt an Bor von 10 ppm-Gew bis 1,8 Gew.-% in Bezug auf den Gesamtgehalt von 100 Gew.-% der planaren Siliziumanode aufweisen.

Gegenstand der Erfindung ist eine Primärzelle umfassend Silizium-Partikel, die einen Gehalt an Bor von 10 Gew.-ppm bis 1,8 Gew.-% aufweisen.

Ein bevorzugter Anteil an Bindemittel im Elektrodenmaterial liegt im Bereich von größer 20 bis kleiner 40 Gew.-%, vorzugsweise 22 Gew.-% bis 38 Gew.-%, in der Gesamtzusammensetzung des Kathodenmaterials oder des Anodenmaterials.

In weiteren Alternativen kann das Kathodenmaterial des Weiteren als Additive mindestens ein Additiv umfassen ausgewählt aus $Bi_2O_3$, $PbO_2$, $SnO_2$, $Bi_2O_3 \cdot 3ZrO_3$ und $K_2Cr_2O_7$, wobei das Additiv zu 0,1 bis 10 Gew.-% im Kathodenmaterial vorliegt und Mangandioxid, der Leitfähigkeitsvermittler sowie optional ein Bindemittel auf 100 Gew.-% in der Gesamt-zusammensetzung des Kathodenmaterials vorliegen. Ist die Kathode eine Luftkathode kann das Kathodenmaterial ggf. zusätzlich Silber als Katalysator umfassen, insbesondere nanopartikuläre Silberartikel.

Dabei ist es weiter besonders bevorzugt, wenn die Anode, insbesondere das Anodenmaterial, insbesondere im geladenen Zustand der Primärzelle, kein Lithium umfasst, vorzugsweise keine Lithium-Ionen, im Konzentrationsbereich von größer gleich 10000 Gew-ppm, größer gleich 1000 Gew.-ppm aufweist. Besonders bevorzugt weist das Anodenmaterial kleiner 100 Gew.-ppm LithiumAtome auf. Vorzugsweise weist das Anodenmaterial kleiner $10^{20}$ Lithium-Atome/cm$^3$ Silizium-Partikel auf. Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt.

Nach einer weiteren Ausführungsform ist es bevorzugt, wenn die Primärpartikel der Silizium-Partikel Agglomerate und/oder Aggregate oder Gemische davon bilden und vorzugsweise in einem porösen Silizium-Netzwerk angeordnet sein können, insbesondere können die Agglomerate, Aggregate oder Gemische dieser mechanisch zu einem porösen Silizium-Netzwerk verhakt sein. Insoweit kann das Anodenmaterial besonders bevorzugt ein poröses Silizium-Netzwerk aus Silizium-Primärpartikeln, Agglomeraten aus Silizium-Primärpartikeln, Aggregaten aus Silizium-Primärpartikeln und/oder Gemischen davon sein.

Dabei ist es besonders bevorzugt, wenn die Silizium-Partikel, insbesondere die Silizium-Primärpartikel, im Wesentlichen amorph (röntgenamorph) sind, da auf diese Weise sichergestellt wird, dass in dem Elektrolyten eine gleichmäßige Auflösung der Silizium-Partikel gewährleistet ist. Bei im Wesentlichen kristallinem Silizium würde die Auflösung im Elektrolyten anisotrop erfolgen. Amorphes Silizium wird isotrop aufgelöst, so dass amorphes Silizium eine höhere Energiedichte liefern kann. Beispielsweise ist in alkalischen Ätzmitteln die Ätzrate für die (111)-Richtungen eines Siliziumkristalls ungefähr zwei Größenordnungen kleiner als die jeder anderen Richtung. Die (100)-orientierten Flächen des Siliziumkristalls werden anderthalb mal so schnell geätzt wie die (110)-orientierten Flächen. Gleichfalls können dotierte, amorphe Silizium-Partikel eingesetzt werden. Ist die Dotierung von p-Typ Silizium-Partikeln größer als > $10^{19}$ je cm$^3$, wird die Ätzrate herabgesetzt, da gilt, je höher die Dotierrate desto geringer die Ätzrate. Insofern ist über die Dotierung in amorphen Silizium-Partikeln die Leistungsdichte auch über die Ätzrate einstellbar.

Die Kathode und/oder die Anode weisen vorzugsweise eine Porosität auf, die bestimmt wird über Dichtemessung. Vorzugsweise beträgt die Porosität der Kathode und/oder der Anode von 10 bis 30 Vol.-% in Bezug auf das Gesamtvolumen der Kathode von 100 Vol.-%, bevorzugt von 12 bis 28 Vol.-%, besonders bevorzugt von 15 Vol.-% bis 27 Vol.-%. Die Porosität ist der Zwischenraum in der Anode und/oder der Kathode, der für den fluiden Elektrolyten verfügbar ist. Die Porosität wird ausgedrückt als prozentualer Wert aus der Differenz der theoretischen Festkörperdichte minus der vorliegenden Dichte des betrachteten Volumens bezogen auf die Festkörperdichte der Kathode oder der Anode. Es können die über die Porosität gebildeten Zwischenräume teilweise oder vollständig mit Elektrolyt gefüllt sein.

Porosität POS:

Festkörperdichte von Silizium FKSi = 2,3 g/cm$^3$

Dichte der Beispielanode basierend auf Siliziumpulver versintert SPSSi zwischen 0,1 bis 2,3 g/cm$^3$.

Berechnung der Porosität für ein Anodenbeispiel mit einer Dichte von 1,5 g/cm$^3$

$$POS = [(FKSi – SPSSi)/ FKSi]*100 \text{ in } \%;$$

eingesetzt

$$POS = [(2{,}3 \text{ g/cm}^3 - 1{,}8 \text{ g/cm}^3)/2{,}3 \text{ g/cm}^3]*100 = 21{,}7 \%$$

Des Weiteren umfasst der Elektrolyt vorzugsweise eine wässrige Zusammensetzung umfassend Hydroxid-Anionen, Carbonat-Anionen, wie in $Na_2CO_3$, oder Halogenid-Anionen, insbesondere Fluorid-Anionen und/oder Chlorid-Anionen. Bevorzugt sind eine wässrige Hydroxid-Lösung oder eine wässrige Fluorid-Anionen enthaltende Lösung oder Suspensionen.

Ferner ist es entsprechend weiterer Ausführungsformen bevorzugt, wenn der wässrige Elektrolyt mindestens ein Salz ausgewählt aus Ammonium-Salze der Halogenide, Ammonium-Salze der Carbonate, Ammoniumhydroxid, Alklihalogenide, Erdalkalihalogendie, Alkalicarbonat, Erdalkalicarbonat, Halogenide der Seltenen Erden, Fluoride der Seltenen Erden, besonders bevorzugt Mangansalzen, wie Mangandifluorid und/oder Mangandichlorid, Ammonium-Salzen, wie Ammoniumhalogenide, insbesondere Ammonium-fluorid und/oder Ammoniumchlorid, Alkalihydroxide, wie Kaliumhydroxid und/oder Natrium-hydroxid, Alkalihalogenide, vorzugsweise Alkalifluoride, wie Natriumfluorid und/oder Kalium-fluorid, organische Carbonsäuren und/oder deren Salze, wie Zitronensäure und/oder Salze von Carbonsäuren umfasst. Des Weiteren kann der Elektrolyt Salze von Seltenerden-Metallen, wie Fluoride von Seltenerden-Metallen umfassen. Ferner kann der Elektrolyt Carbonate von Alkali- und/oder Erdalkalimetallen umfassen. In einer besonders bevorzugten Alternative umfasst der Elektrolyt Salze, die ausgewählt sind aus Mangandifluorid, Mangandichlorid und/oder Ammoniumfluorid und optional Kaliumfluorid.

Das Netzmittel im Elektrolyten kann vorzugsweise mit einem Gehalt von 1 bis 1000 ppm.-Gew. in Bezug auf die Gesamtzusammensetzung des Elektrolyten von 100 Gew.-% vorliegen.

Eine bevorzugte Zusammensetzung eines wässrigen Elektrolyten umfasst 2 bis 50 Gew.- % mindestens eines Salzes, insbesondere eines anorganischen Salzes, insbesondere 18 bis 22 Gew.-% mindestens eines anorganischen Salzes, insbesondere KOH, oder einer Mischung von mindestens zwei anorganischen Salzen und 50 bis 98 Gew.-% Wasser, insbesondere 78 bis 82 Gew.-% Wasser, und optional Additive auf die Gesamtzusammensetzung von 100 Gew.-% des wässrigen Elektrolyten. Bevorzugt kann eine Mischung zweier anorganischer Salze im Elektrolyten vorliegen, die zu 2 bis 15 Gew.-% eines Salzes sowie 15 bis 25 Gew.-% eines anderen Salzes in der Gesamtzusammensetzung von 100 Gew.-% des wässrigen Elektrolyten vorliegen.

Ein besonders bevorzugtes Kathodenmaterial der Kathode umfasst zu 70 bis 95 Gew.-% als Kathodenmaterial Mangandioxid, insbesondere Battery Grade und bevorzugt einer Partikel-größe von kleiner gleich 10 Mikrometer, und einen Kohlenstoff enthaltenden Leitfähigkeits-vermittler, insbesondere von 5 bis 30 Gew.-% Leitfähigkeitsvermittler, und optional weitere Additive auf 100 Gew.-% des Kathodenmaterials. Der Leitfähigkeitsvermittler ist vorzugsweise ein Kohlenstoff enthaltender Partikel, Mischung dieser oder eine Kohlenstoff enthaltende Paste.

Nachfolgend wird die Erfindung anhand der Ausführungsbeispiele näher erläutert, ohne die Erfindung auf diese Spezifischen Beispiele zu beschränken.

**Ausführungsbeispiele:**

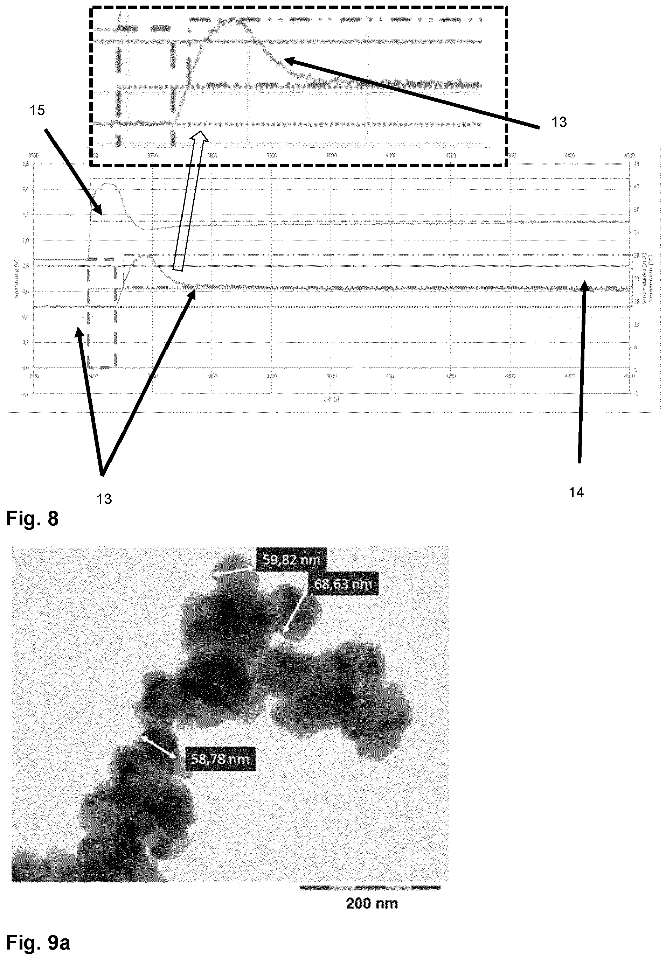

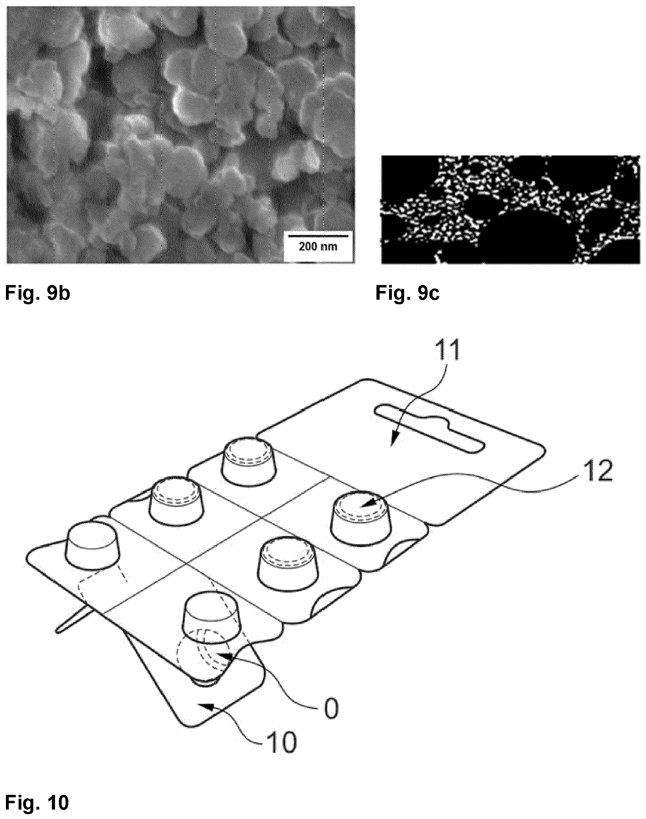

Herstellung von Silizium-Partikeln (4.1): Eine beispielhafte Herstellung des Siliziums in Form von Silizium-Partikeln in Form eines Silizium-Pulvers mit mittlerer Partikelgröße und Partikelgrößenverteilung im Bereich von 100 bis 200 nm, wie vorzugsweise Siridion-Black mit einem Gehalt an Kohlenstoff. Das Pulver kann durch Zerstäuben oder Verdüsen einer Siliziumschmelze gewonnen werden. In einer bevorzugten Variante erfolgt die Gewinnung durch Pyrolyse eines Monosilan-, Boran bzw. Monosilan-Phosphin - Gemisches ggf. in Gegenwart eines Kohlenwasserstoffs, z.B. von Methan. Das so erhaltene Pulver von Silizium-Partikeln wird in eine Negativform eingebracht, z.B. durch Einstreuen. Nachfolgend kann durch Heißpresssintern ein gesinterter Siliziumkörper (Formkörper), der als Anode eingesetzt wird, erhalten werden. Der so gewonnene plattenförmige Formkörper kann ggf. be-/geschnitten werden, um einzelne Anodenelemente zu erhalten. Die **Figuren 9a** und **9b** zeigen TEM Aufnahme des dotierten Siliziumpulvers **(Fig. 9a)** und **Fig. 9b** nach dem Pressen und Heißsintern auf eine Dichte von 1,1 g/cm³. **Figur 9c** stellt dar ein Siliziumlegierungspulver nach dem Verdichten auf 90 % der theoretisch möglichen Festkörperdichte von etwa 2,15 g/cm³, verbunden mit einer hohen Wärmeleitfähigkeit.

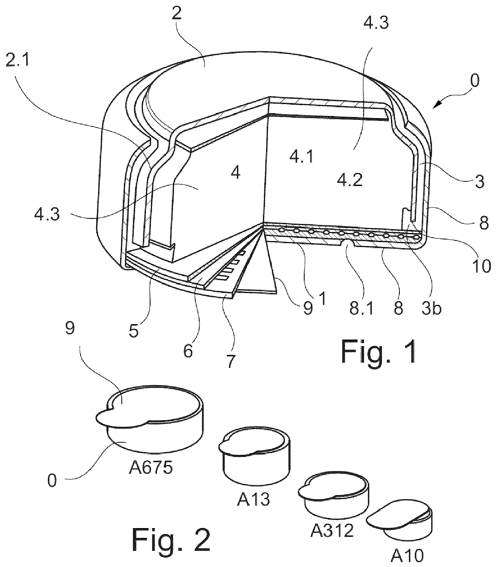

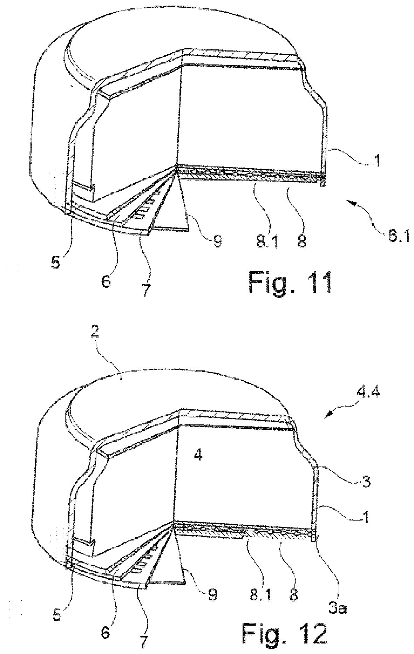

**Figur 1** zeigt ein Kathodengehäuse **8** und ein darin angeordnetes Anodengehäuse **2.1** einer erfindungsgemäßen Knopfzelle **0**. Eine Isolatorschicht **3** optional mit Dichtungsschale **3b** trennt das Anodengehäuse **2** räumlich und elektrisch vom Kathodengehäuse **8**. Sowohl das Anodengehäuse **2.1** als auch das Kathodengehäuse **8** sind napfförmig bzw. becherartig ausgebildet. Die beiden Gehäuse sind überwiegend zylindrisch ausgebildet und können in einander geschoben werden, wobei stirnseitig jeweils die Böden des Anodengehäuses als Anode **2** und des Kathodengehäuses **8** als Luftkathode **1** die Knopfzelle begrenzen. Das Anodengehäuse **2.1** ist im Kathodengehäuse **8** angeordnet. Die Luftkathode **1** ist im Bereich des Bodens des Kathodengehäuses **8** angeordnet und bedeckt diesen vorzugsweise vollständig. Im Boden des Kathodengehäuses sind Öffnungen **8.1** für den Gasdurchtritt angeordnet. Der Bereich des Kathodengehäuses **8** mit Öffnungen **8.1** für den Gasdurchtritt tritt wird als Boden des Kathodengehäuses angesehen und ist insbesondere Teil der Luftkathode **1.** Innen unmittelbar oder beabstandet auf dem Boden des Kathodengehäuses sind in der folgenden Reihenfolge als Schichten angeordnet: optional Gasdiffusorscheibe, Gasdiffusionselektrode **7,** optional eine oder mehrere Sperrschichten, Kathodenzusammensetzung **6** und Separator **5.** Auf der gegenüberliegenden Seite des Separators **5** folgt in der Regel der Anodenraum **4.3.** Die Gasdiffusionselektrode **7,** optional eine oder mehrere Sperrschichten, die Kathodenzusammensetzung **6** und der Separator **5** können eine Luftkathodenbaueinheit bzw. Kathodenbaugruppe **6.1** sowie Zwischenprodukt **(Figur 12)** zur Herstellung der Primärzelle umfassend Luft-Kathode, beispielsweise als Kathodenbaugruppe, Anode mit Anodenmaterial und Separator **(Figuren 11 und 12)** ausbilden, die vorzugsweise als eine Einheit auf den Boden des Kathodengehäuses eingesetzt werden kann. Das Anodengehäuse ist auf die Schicht des Separators mit der Öffnung des Anodengehäuses aufgesetzt und bildet den Anodenraum **4.3,** in dem das Anodenmaterial **4** angeordnet ist. Der Anodenraum kann an seiner inneren Oberfläche eine Beschichtung umfassend ein Metall oder eine Legierung aufweisen. Die Beschichtung kann mittels Plattieren aufgebracht werden.

Ferner ist Gegenstand der Erfindung ist eine Kathodenbaugruppe **(Fig. 11)** als Zwischenprodukt zur Herstellung einer Silizium-Luft-Primärzelle umfassend Luft-Kathode, Separator **5,** optional mit Dichtungsschale **3b** aus Kunststoff **3a** und/oder Isolatorschicht **3.** Das Anodengehäuse kann innen ein bis mehrfach plattiert sein, insbesondere mit Kupfer. Das Kathodengehäuse kann aus Nickel plattiertem Stahl hergestellt sein.

Als Kathodenzusammensetzung **6** kann eine Mischung umfassend Mangandioxid, Carbonblack und ein Bindemittel, wie Teflon enthaltendes Bindemittel sowie ein Katalysator bei Verwendung einer Gasdiffusionselektrode. Die Elektrode **7** kann ein Stahlgitter, vorzugsweise aus einem plattierten Stahldraht, bspw. Nickelplattiert, sein. Gleichfalls kann eine Gasdiffusionselektrode umfassen ein Metallnetz, PTFE-Carbonblack-Katalysator-Gemenge, so wie bspw. von den Firmen Covestro oder Gaskatel kommerziell erhältlich sind.

Das Anodenmaterial **4** kann umfassen Silizium-Partikel **4.1,** Agglomerate und/oder Aggregate von Silizium-Partikeln jeweils unabhängig in einem Gel als Elektrolyt **4.2.** Alternativ kann das Anodenmaterial **4** Silizium in Form eines oder mehrerer dreidimensionaler Formkörper **4.5** als Anode **2** aufweisen, die durch Pressen, zumindest teilweises Schmelzen und/oder Sintern oder Plasmaspritzen unter Wasserstoffatmosphäre erhältlich sind.

**Figur 2** stellt dar eine Anordnung von Knopfzellen **0** in der Ausgestaltung als Hörgerätebatterien **0** mit Schutzfolie **9** dar. Von links nach rechts sind dargestellt A675 Hörgerätebatterien (11,56 mm × 5,33 mm), A13 (7,80 mm × 5,35 mm), A312 (7,80 mm × 3,45 mm) und A10 (5,80 mm × 3,60 mm).

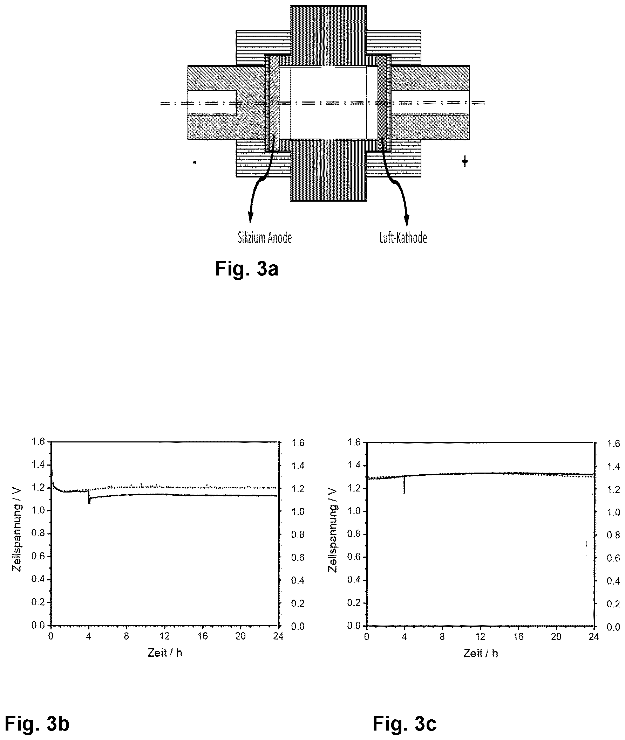

**Figur 3a** stellt dar, eine Primärzelle mit einer Silizium-Anode und einer Luftkathode. Zwischen den Elektroden der Anoden oder Luftkathode ist eine Kammer zur Aufnahme des Elektrolyten angeordnet. Als Elektrolyt wird eine wässrige, 5 molare Kaliumhydroxid Lösung eingesetzt. Die Anodenfläche (Silizium-Anode) beträgt circa 0,44 cm$^2$, das Elektrolyt-Volumen umfasst ca. 0,6 cm$^3$ und die Primärzelle wird bei 25 °C, 50 % rel. Humidity/Feuchte vermessen. Die Primärzelle, siehe **Figur 3b,** wird für 24 Stunden im OCV (Open Circuit Voltage, (Kurve ...)) gehalten. Eine Weitere Primärzelle wurde für 4 Stunden im OCV gehalten und anschließend für 20 Stunden entladen.

Zwei weitere Primärzelle wurden bei 40 °C, 50 % rel. Humidity/Feuchte vermessen, siehe **Figur 3c**. Die erste Primärzelle wurden über 24 h in OCV gehalten (Kurve ...) und die Andere für 4 Stunden im OCV gehalten und anschließend für 20 Stunden entladen (Kurve _).

Bei den jeweiligen Stromentnahmen vom 0,1 Milliampere/cm$^2$ beträgt die Zellspannung konstant um 1,15 Volt - **Figur 3b**. Wird die Temperatur auf 40 °C erhöht und unter sonst gleichen Bedingungen gemessen, beträgt die Zellspannung konstant etwa 1,3 Volt - **Figur 3c**. In der nachfolgenden **Tabelle** 1 sind die Korrosionsmassen und die Anoden-Stromkonversionseffizienz (%) aufgeführt.

**Tabelle 1:**

| Temperatur | Zelle | Korrosionsmasse /mg | Anoden Stromkonversionseffizienz (%) |
|---|---|---|---|
| 25 °C | 4 h OCV + 20 h Entladung | 5.82 | 0,225/(5,82-4,71)*100 = 20 % |
| 25 °C | 24 h OCV | 4,71 | 0 |
| 40 °C | 4 h OCV + 20 h Entladung | 20,16 | 0,225/(20,16-19,61)*100 40% |
| 40 °C | 24 h OCV | 19,61 | 0 |

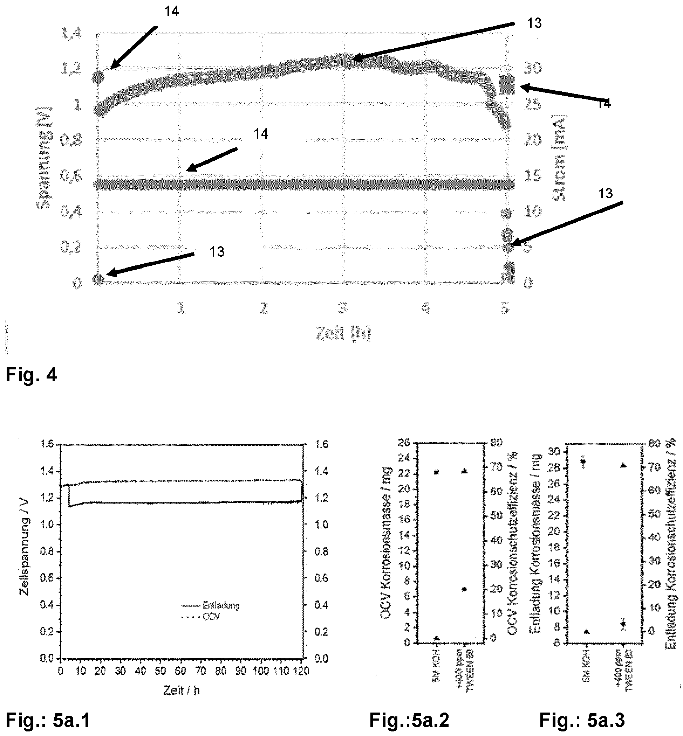

**Figur 4** zeigt eine Laststromkurve bzw. Entladekurve **13** für ein Silizium-Pulver umfassend mit Bor dotierte Silizium-Partikel. Das Pulver wurde einem Formkörper gesintert und als Anode in einer größeren analog gebauten Primärzelle eingesetzt (Anodenfläche: 4,5 cm$^2$, spez. Stromstärke 6240 Mikroampere/cm$^2$). An die Zelle wurde über 5 Stunden eine Spannung von 0,6 Volt angelegt (Spannung **14**). Insgesamt wurde die Zelle über 48 Stunden in aufeinanderfolgenden Versuchen belastet. **Figur 4** zeigt über einen Zeitraum von 5 Stunden ein Stromfluss zwischen 20 und 32 Milliampere bei konstanter Spannung von 0,6 Volt, der entnommen wird. Der Massenverlust an der Anode betrug über die gesamte Versuchsdauer 135 mg. Insgesamt wurden 505,44 Amperesekunden Strom entnommen und wobei 36,67 mg Silizium dem Stromverbrauch zuzurechnen sind. Damit ist unter diesen Bedingungen ohne Anpassung des Elektrolyten die Anodeneffizienz (%) als Gesamtverbrauch Silizium/Siliziumverbrauch durch Stromentnahme 27,17 %.

Übliche 1,5 Volt Batterien (AA) erreichen eine Energie bzw. können eine Arbeit von 1.39 bis 1.47 Wh über 143 bis 155 Minuten bei einer Spannung von 1.13 bis 1.6 Volt bereitstellen.

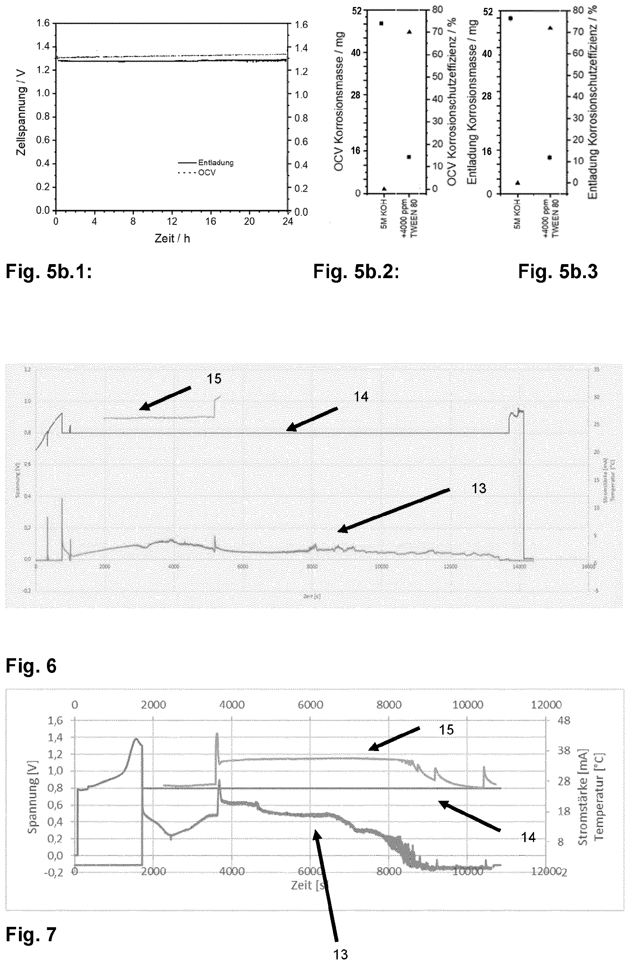

Die **Figuren 5a, 5b** und **5c** zeigen eine Veränderung der Korrosionsmassen unter Verwendung von Netzmitteln, wie Tween 80 (400 ppm). Gemessen wurde Primärzelle mit analogem Aufbau wie eine Hörgeräte-Batterie: Anpassung der Elektrodenfläche auf A675 mit Durchmesser ~12 mm, Temperatur bei 60°C. Im Anwendungsfall am/im Ohr ist somit mit einer eher geringeren Korrosion zu rechnen.

Die elektronische Belastung der Zelle wird über eine eingeprägte Ausgangsspannung von UI=0,8V sowie einer mittleren Strombelastung mit ~2 mA über 3,5 h nachgebildet; der gemessene Massenverlust beträgt ~2mg Silizium (560mg Silizium Ausgangsmasse der Anode), Daraus kann eine Anoden-Effizienz von ~87% abgeschätzt werden (1,74 mg strombezogener Siliziumverbrauch dividiert durch 2mg gesamte Siliziummassendifferenz ergibt 0,87 bzw. nach Prozentnormierung 87%); Dabei betragen die Wiederstandwerte- für Lastwiderstand RL ~400 Ohm - Mittelwert [228 Ohm ... 400 Ohm... 800 Ohm] und für den Innenwiderstand der Zelle RI ~400 Ohm.

Die **Figuren 5a Nr. 1 bis 3**, und **Figuren 5b Nr. 1 bis 3** stellen dar, den Einfluss von Polyalkylenoxid-Gruppen aufweisenden Verbindungen im wässrigen Elektrolyten bei Raumtemperatur (25 °C) und erhöhter Temperatur (60 °C) in einer Zelle gemäß **Fig. 3a** und einer Elektrodenfläche von 1,13 cm$^2$. Dargestellt sind in den Figuren 5a Nr. 1 bis 3 von links nach rechts: **Diagramm links** - **Fig. 5a.1:** Leerlaufspannung OCV und Zellspannung unter 0,2 Milliampere Last - (120 Stunden), **Diagramm Mitte - Figur 5a.2:** Korrosion unter OCV, **Diagramm rechts** - **Figur 5a.3:** Korrosion unter elektrischer Last bei 25 °C (Entladung).

**Figur 5a.1** stellt dar die Zellspannung von ca. 1,3 Volt bei Leerlauf (OCV) sowie unter Last bei 0,2 mA/cm$^2$, (Milliampere/cm$^2$) mit einer Zellspannung von ca. 1,15 Volt bei 25 °C und 50 % rel. Feuchte, Elektrolyt 5M KOH in Gegenwart von 400 ppm-Gew. Tween 80 (CAS: 9005-65-6, Polysorbat). Die Korrosionsmasse in mg (■) beträgt im OCV Betrieb gemäß **Figur 5a.2** in 5 M KOH ohne Zusatz von Tween 80 bei ca. 22 mg und mit Zusatz von Tween 80 bei 25 °C etwa 7 mg. Die OCV Korrosionsschutzeffizienz in % (▲), die durch den Zusatz von Tween 80 erzielt wird, liegt somit bei ca. 70 %. Ohne Tween 80 ist das System ohne Korrosionsschutz (0%). Unter elektronischer Last bei 0,2 mA/cm$^2$ beträgt gemäß **Figur 5.a.3** die Korrosionsmasse (■) in 5 M KOH ohne Zusatz von Tween 80 gemäß **Figur 5a.3** etwa 29,1 mg und mit Zusatz von Tween 80 bei 25 °C ca. 8 mg. Die OCV Korrosionsschutzeffizienz (▲) beträgt somit auch unter Last etwa 72%, die durch den Zusatz von Tween 80 erzielt wird.

Gleichfalls sind in den **Figuren 5b Nr. 1 bis 3** von links nach rechts dargestellt: **Diagramm links** - **Fig. 5b.1:** Leerlaufspannung OCV und Zellspannung unter 1,13 Milliampere Strombelastung jeweils über 24 Stunden, **Diagramm Mitte** - **Fig. 5b.2:** Korrosion unter OCV, **Diagramm links** - **Fig. 5b.3:** Korrosion unter elektrischer Belastung (Entladung). **Fig. 5b.1** stellt dar die Zellspannung von ca. 1,35 Volt bei Leerlaufspannung (OCV) sowie unter Last bei 1 mA/cm$^2$, (Milliampere/cm$^2$) mit einer Zellspannung von ca. 1,3 Volt bei 60°C und 50 % rel. Feuchte, mit Elektrolyt 5M KOH in Gegenwart von 4000 ppm-Gew. Tween80 (CAS: 9005-65-6, Polysorbat). Die Korrosionsmasse (■) beträgt im OCV Betrieb gemäß **Fig. 5b.2** in 5 M KOH ohne Zusatz von Tween 80 bei ca. 49 mg und mit Zusatz von Tween 80 bei 60 °C etwa 14 mg. Die OCV Korrosionsschutzeffizienz (▲), welche durch den Zusatz von Tween 80 erzielt wird, liegt somit bei ca. 72 %. Unter elektrischer Belastung (Entladung) bei 1 mA/cm$^2$ beträgt die Korrosionsmasse (■) in 5 M KOH ohne Zusatz von Tween 80 gemäß **Fig. 5b.3** etwa 51,1 mg und mit Zusatz von Tween 80 bei 60 °C ca. 15,6 mg. Die Korrosionsschutzeffizienz (▲) beträgt somit auch unter Last etwa 70%, die durch den Zusatz von Tween 80 erzielt wird. Ohne Zusatz ist die Korrosionsschutzeffizienz 0%.

**Fig. 6** stellt die Zellspannung und Stromkurve einer Hörgerätebatterie in Betrieb dar. Die Elektrodenfläche der Versuchszelle wurde auf die Batterie-Norm A675 mit Durchmesser ~12 mm angepasst sowie die Elektrolyt-Temperatur variiert: Der Betrieb startet bei Raumtemperatur und wurde nach etwa 5500 Sekunden auf ~31 °C erhöht (Temperaturkurve **15**), An der y-Achse ist links die Spannung (V) der Zelle und rechts die Stromstärke in Milliampere (mA) aufgetragen. Der Anwendungsfall repräsentiert die Verwendung der Versuchszelle in einem Hörgerät am Ohr; Die elektronische Last des Hörverstärkers wurde über die eingeprägte Ausgangsspannung in Höhe von UI=0,8V sowie einen variierenden Laststromentnahme mit ~1,8 mA über 1,5 h (5500 Sekunden bis 11000 Sekundenabgebildet. **Fig. 6:** y-Achse: Spannung [V] (links), rechts: Milliampere [mA], Temp [°C], x-Achse: Zeit [Sekunden].

**Fig. 7** stellt dar, eine weiteren Hörgerätebatterie in Betrieb: Auch hier wurde die Elektrodenfläche auf A675 mit Durchmesser ~12 mm angepasst. Ferner die Dichte der Siliziumanode auf 1,3 g/cm$^3$ reduziert. Das Diagramm zeigt die Stromantwort der Zelle bei einem Temperatursprung von 25°C auf 45°C (Temperaturkurve **15** Peak im Zeitbereich zwischen 3000 und 4000 Sekunden) wobei eine konstante Spannung **14** der Zelle von 0,8 V eingeprägt wurde. Die Primärzelle wurde bei 35°C weiter betrieben (ab ~3750 Sekunden bis 8000 Sekunden). Es ist zu erkennen, dass mit oder unmittelbar nach dem Temperatursprung auch die Stromkurve analog sich erhöht. Bei erhöhter Temperatur fließt ein höherer Strom (Stromkurve **13**) der bis zu 28mA erreicht nach dem Temperatursprung **15** von 1 Minute. Bei konstanten 35 °C fließt ein Strom zwischen 18 und 20 mA. Nach ca. 7000 Sekunden bzw. einer knappen Stunde Stromabnahme beginnt die Stromkurve 13 abzufallen. Der Anwendungsfall bildet den Betrieb eines Hörgerätes im Ohr ab; Die Belastung mit einem elektronischen Verstärker erfolgt durch eine eingeprägte Ausgangsspannung von UI = 0,8V; wobei der Laststrom ~20 mA beträgt. Die dem Fachmann bekannte Totzeit der Anordnung beträgt gemäß Fig. 7 in etwa 60 Sekunden, die Zeitverzögerung der Systemantwort ca. 30 Sekunden. Der gesamte Messzeitraum des Versuchsbetriebs ca. 1,5 h; wovon etwa der Bereich von 3800 Sekunden bis circa 8000 Sekunden den Betreib im Ohr repräsentiert. Der Lastwiderstand RL im Versuch variiert zwischen [26 Ohm (bei 45°C), 40 Ohm (bei 35°C), und 54 Ohm (bei 26°C)], Der Innenwiderstand RI der Zelle ~ beträgt ~40 +/-15 Ohm.

**Fig. 7:** y-Achse: Spannung [V] (links), rechts: Strom in Milliampere [mA], Temperatur in Grad Celsius [°C], x-Achse: Zeit in Sekunden [Sekunden].

**Figur 8** stellt dar eine Vergrößerung der Spannungs- **14,** Stromfluss- **13** und Temperaturkurve **15** der Figur 7. In Figur 8 ist gut zu erkennen, wie bei angelegter konstanter Spannung von 0,8 Volt (V) und einem induzierten Temperatursprung von 35 °C auf 45 °C der Stromfluss zunächst bei ca. 17 Milliampere verharrt. Der Stromfluss springt zeitversetzt um 30 bis 60 Sekunden nach der Temperaturerhöhung von ca. 17 Milliampere auf 28 Milliampere hoch und klingt auf konstante 21 Milliampere wieder ab. Der wiedergegebene Messzeitraum liegt bei etwa 24 Minuten. Über mindestens 16 Minuten ist ein nahezu konstanter Stromfluss zu beobachten. Ferner ist zu erkennen, dass bei einer Temperatur von 28 °C zu Beginn der Messung ein Stromfluss von 17 Milliampere bei 0,8 Volt Zellspannung abgenommen werden kann, während nach der Temperaturerhöhung auf zunächst 45°C gefolgt von 35 °C ein konstant erhöhter Stromfluss von 21-22 Milliampere geliefert wird. Überraschend hat sich gezeigt, dass der Innenwiderstand der Primärzelle umgekehrt proportional zu Temperatur der Primärzelle verhält.

**Figur 9a** und **9b** zeigen TEM Aufnahmen (in iso-Pronanol/Wasser dispers aufgetragen) des Siliziumpulvers vor und nach dem Pressen und Heißsintern. **Figur 9c** illustriert schematisch einen Schnitt durch den Anodenkörper nach dem Heißsintern wobei die schwarzen Kugeln das Silizium darstellen und die weißen Gebiete die erhalten gebliebenen "freien" Raumbereich des Silizumpulvers darin.

**Figur 10** stellt dar eine Verpackungseinheit **11,** insbesondere als Dosierverpackung, mit Trägermaterial **10** und transparentem Blister **12,** auf dem Trägermaterial ist eine Haftschicht der, dem Blister zugewandten Oberseite aufgebracht. Auf der Haftschicht ist die Hörgerätezelle mit den Öffnungen der Luftkathode luftdicht aufgebracht. Die Haftschicht ist vorzugsweise eine Klebeschicht von der die Hörgerätezelle ohne Rückstände entfernbar ist. Gleichfalls kann die Verpackungseinheit auch als eine andere Form einer Dosierverpackung vorliegen, wie als Drehverpackung. Das Trägermaterial kann als eine Fahne ausgebildet sein, die der Anwender leicht greifen kann, um das Einlegen der Hörgerätezelle zu erleichtern.

**Bezugszeichen:**

**0** Knopfzelle, insbesondere Hörgerätebatterie
**1** Kathode, insbesondere Luft-Kathoden (äußeres Gehäuse)
**2** Anode, insbesondere Anodengehäuse
**3** Isolatorschicht, **3a** Dichtungsschale **3b** aus Kunststoff, **3b** Dichtungsschale
**4** Anodenmaterial i) Anoden Partikel (Silizium-Partikel) **4.1** und ii) Elektrolyt **4.2,** Anodenraum **4.3,** Zwischenprodukt Knopfzelle umfassend Kathodenbaugruppe und Anode, Formkörper **4.5**
**5** Separator
**6** Kathodenzusammensetzung, insbesondere umfassend $MnO_2$, Ruß, Aktivkohle,
**6.1** Kathodenbaugruppe
**7** Gasdiffusionselektrode
**8** Kathodengehäuse (äußeres Gehäuse), **8.1** Bereich des Kathodengehäuses mit Öffnungen für Gasdurchtritt, insbesondere Luftdurchtritt, als Bestandteil der Luftkathode **9** Schutzfolie
**10** Trägermaterial
**11** Verkaufsverpackung
**12** transparenter Blister
**13** Stromkurve
**14** Spannungskurve
**15** Temperaturkurve

**Patentansprüche**

1. Elektrochemische Silizium-Luft-Primärzelle, **dadurch gekennzeichnet, dass** sie als Silizium-Luft-Knopfzelle (0) ausgebildet ist.

2. Primärzelle nach Anspruch 1, **dadurch gekennzeichnet, dass** sie umfasst eine Anode (2), eine Luftkathode (1), einen Elektrolyten (4.2) sowie mindestens einen Separator (5), wobei der Separator die Luftkathode (1) und die Anode voneinander separiert.

3. Primärzelle nach Anspruch 1 oder 2, **dadurch gekennzeichnet, dass** die Anode als Anodenmaterial (4) Silizium umfasst, wobei insbesondere

   i) das Silizium in Form von Silizium-Partikeln (4.1) vorliegt, oder
   ii) das Silizium liegt in Form eines Formkörpers (4.5) umfassend ein Gerüst aus Silizium.

4. Primärzelle nach einem der Ansprüche 1 bis 3, **dadurch gekennzeichnet, dass** sie umfasst ein Anodengehäuse (2.1), ein Kathodengehäuse (8), Isolatorschicht (3), einen Bereich des Kathodengehäuses mit (8.1) Öffnungen für Gasdurchtritt, insbesondere als Bestandteil der Luftkathode (8.2), einen Elektrolyten (4.2) sowie mindestens einen Separator (5), eine Kathodenzusammensetzung (6) und optional eine Gasdiffusionselektrode (7) umfasst.

5. Primärzelle nach einem der Ansprüche 1 bis 4, **dadurch gekennzeichnet, dass** die Knopfzelle eine Hörgerätebatterie ist.

6. Primärzelle nach einem der Ansprüche 1 bis 5, **dadurch gekennzeichnet, dass** die Kathodenzusammensetzung (6) umfasst i) mindestens ein Manganoxid, insbesondere Manganoxid und/oder Mangandioxid, Platin, Platin-Basis, Silber, Palladium, Ruthenium oder andere Oxide von Metallen die Reduktion von Sauerstoff katalysieren, je einzeln oder gemeinsam als Katalysator und ii) optional Kohlenstoff enthaltenden Leitfähigkeitsvermittler.

7. Primärzelle nach einem der Ansprüche 1 bis 6, **dadurch gekennzeichnet, dass** die Anode als Anodenmaterial (4) Silizium in Form eines dreidimensionalen Formkörpers (4.5) erhältlich aus Silizium-Partikeln und/oder umfassend Silizium-Partikel (4.1) vorliegt.

8. Primärzelle nach einem der Ansprüche 1 bis 7, **dadurch gekennzeichnet, dass** der Formkörper (4.5) der Anode eine Dichte von 0,1 $g/cm^3$ bis 2,3 $g/cm_3$ aufweist.

9. Primärzelle nach einem der Ansprüche 3, 7 oder 8, **dadurch gekennzeichnet, dass** der Formkörper ein zylindrischer Formkörper ist, insbesondere mit einem Durchmesser von 2 bis 14 mm und einer Höhe von 0,1 mm bis 5 mm, insbesondere ist das Verhältnis von Durchmesser zu Höhe des Formkörpers größer 1,1 : 1, besonders bevorzugt von größer gleich 1,5 : 1.

10. Primärzelle nach einem der Ansprüche 2 bis 9, **dadurch gekennzeichnet, dass** der Elektrolyt anorganische Salze umfasst und optional einen Puffer und/oder ein Puffersystem enthält.

11. Primärzelle nach einem der Ansprüche 1 bis 5, **dadurch gekennzeichnet, dass** der Elektrolyt eine wässrige Hydroxid-Anionen, Carbonat-Anionen oder Halogenid-Anionen, insbesondere Fluorid-Anionen und/oder Chlorid-Anionen enthaltende Zusammensetzung ist.

12. Zwischenprodukt zur Herstellung einer Silizium-Luft-Primärzelle nach einem der Ansprüche 1 bis 11 umfassend eine Kathodenbaugruppe (6.1) und optional eine Anode (2) mit Anodenmaterial (4), insbesondere als Zwischenprodukt einer Silizium-Luft- Knopfzelle umfassend eine Luft-Kathode, insbesondere eine Kathodenbaugruppe (6.1), eine Anode (2), Anodenmaterial (4) und Separator.

13. Kit umfassend Silizium-Luft-Primärzelle, insbesondere nach einem der Ansprüche 1 bis 10, mit, auf dem Kathodengehäuse im Bereich der Öffnungen (8.1) des Kathodengehäuses für den Gasdurchtritt, insbesondere im Bereich der Luftkathode, angeordneter Schutzfolie.

14. Kit nach Anspruch 13, **dadurch gekennzeichnet, dass** das Kathodengehäuse im Bereich der Öffnungen (8.1) für den Gasdurchtritt, insbesondere im Bereich der Luftkathode, der Silizium-Luft-Primärbatterie, insbesondere der Knopfzelle, bevorzugt der Hörgerätebatterie, unter Vakuum und/oder Schutzgas mit der Schutzfolie (9) versiegelt wurde.

15. Verkaufs- und Vorratspackung (11) für Silizium-Luft-Knopfzellen (0) nach einem der Ansprüche 1 bis 11, bevorzugt mit mindestens einer Silizium-Kopfzelle, insbesondere Packung als Drehverpackung oder vom Blistertyp, insbesondere umfassend ein flächiges Trägermaterial (10) mit einer Ober- und einer Unterseite, wobei auf die Oberseite des Trägermaterials zumindest bereichsweise eine Haftschicht, insbesondere als Klebeschicht, aufgetragen ist, auf die mindestens eine Silizium-Luft-Knopfzelle mit ihrem Bereich des Kathodengehäuses mit den Öffnungen (8.1) für den Gasdurchtritt aufbringbar ist oder angeordnet ist.

16. Verwendung von Silizium als Anodenmaterial in Silizium-Luft Primärzellen, die als Knopfzelle vorliegen.

2.1

2

4.3

0

4.3

4

4.1

4.2

3

8

10

5

6

7

9 1

9

8.1

8

3b

## Fig. 1

9

A675

0

A13

A312

A10

## Fig. 2

Silizium Anode     Luft-Kathode

**Fig. 3a**

**Fig. 3b**

**Fig. 3c**

Fig. 4

Fig.: 5a.1

Fig.:5a.2

Fig.: 5a.3

Fig. 5b.1:                    Fig. 5b.2:                    Fig. 5b.3

**Fig. 6**

**Fig. 7**

**Fig. 8**

**Fig. 9a**

**Fig. 9b**

**Fig. 9c**

**Fig. 10**

Fig. 11

Fig. 12

Europäisches
Patentamt

European
Patent Office

Office européen
des brevets

## EUROPÄISCHER RECHERCHENBERICHT

**Nummer der Anmeldung**

**EP 22 15 8290**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/299550 A1 (EIN-ELI YAIR [IL] ET AL) 29. November 2012 (2012-11-29) | 1-12,16 | INV.<br>H01M4/06 |
| Y | * Seite 2, Absatz 0013 – Seite 11, Absatz 0177; Abbildungen 1-6; Tabelle 1 * | 11,13-15 | H01M4/12<br>H01M4/38<br>H01M12/06 |
| Y | ZHONG XING ET AL: "High-Capacity Silicon-Air Battery in Alkaline Solution", CHEMSUSCHEM,<br>Bd. 5, Nr. 1, 9. Januar 2012 (2012-01-09), Seiten 177-180, XP055964441,<br>DE<br>ISSN: 1864-5631, DOI: 10.1002/cssc.201100426<br>* Zusammenfassung *<br>* Seite 177, Absatz Introduction – Seite 180, Absatz Experimental section * | 11 | H01M50/109<br>B65D75/36 |
| Y | US 6 473 511 B1 (ACETI JOHN GREGORY [US] ET AL) 29. Oktober 2002 (2002-10-29)<br>* Spalte 5, Zeile 10 – Spalte 6, Zeile 26; Abbildungen 4, 6A-6C * | 13,14 | |
| Y | DE 41 28 248 A1 (VARTA BATTERIE [DE]) 4. März 1993 (1993-03-04)<br>* Spalte 1, Zeile 1 – Spalte 3, Zeile 23; Abbildungen 1-3 * | 15 | |

**RECHERCHIERTE SACHGEBIETE (IPC)**

H01M
B65D

Der vorliegende Recherchenbericht wurde für alle Patentansprüche erstellt

| Recherchenort | Abschlußdatum der Recherche | Prüfer |
|---|---|---|
| München | 9. November 2022 | Polisski, Sergej |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    ................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 8290

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2022

| Im Recherchenbericht angeführtes Patentdokument | Datum der Veröffentlichung | Mitglied(er) der Patentfamilie | Datum der Veröffentlichung |
|---|---|---|---|
| US 2012299550 A1 | 29-11-2012 | EP 2502295 A1 | 26-09-2012 |
| | | US 2012299550 A1 | 29-11-2012 |
| | | WO 2011061728 A1 | 26-05-2011 |
| US 6473511 B1 | 29-10-2002 | EP 1159855 A2 | 05-12-2001 |
| | | TW 471233 B | 01-01-2002 |
| | | US 6473511 B1 | 29-10-2002 |
| | | WO 0052964 A2 | 08-09-2000 |
| DE 4128248 A1 | 04-03-1993 | DE 4128248 A1 | 04-03-1993 |
| | | EP 0529199 A1 | 03-03-1993 |
| | | HK 175995 A | 24-11-1995 |
| | | JP H05213368 A | 24-08-1993 |
| | | US 5203455 A | 20-04-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *CHEMICAL ABSTRACTS,* 9005-65-6